# EUROPÄISCHE PATENTANMELDUNG

(11) **EP 0 586 737 A1**
(43) Veröffentlichungstag der Anmeldung: **16.03.1994**
(21) Anmeldenummer: 92115552.9
(22) Anmeldetag: 11.09.1992
(51) Int. Cl.: B23D 51/18, B23D 51/02, B23D 59/04, B23D 49/00, B23D 51/10

(54) **Handgeführte Druckluftsäge mit kolbenstangenlosem Pneumatik-Zylinderantrieb**

(71) Anmelder: Stickel, Anita, D-64859 Eppertshausen (DE); Ziegler, Iris, D-64859 Eppertshausen (DE)
(72) Erfinder: Stickel, Anita, D-64859 Eppertshausen (DE); Ziegler, Iris, D-64859 Eppertshausen (DE)

(57) **Zusammenfassung**

Eine handgeführte Druckluftsäge, u.a. für Steinmaterialien, hat ein hin- und hergehendes Sägeblatt (2), daß von einem kolbenstangenlosen Pneumatikzylinder mit innenliegendem Vollkolben (1) angetrieben wird. Das Sägeblatt (2) ist auf flexibler Weise an einem vom Pneumatikzylinder außengeführten Gleitschlitten (6) angebracht. Der Rücken des auf Zug arbeitenden Sägeblattes (2) wird von einem genuteten Führungsblatt (3) geführt. In der Führungsschiene (3) ist eine Gleitschiene (4) integriert. Diese Gleitschiene (4) besitzt Kanäle (5) für die Zufuhr von Luft oder Wasser für die Kühlung bzw. Schmierung des Sägeblattes (2). Die Säge ist weiter versehen mit Haltevorrichtungen (8.1,8.2) für das Sägegut.

## Beschreibung

Bisher wurden zum Schneiden von Passformaten bei z.B. Gasbeton und porisierten Ziegelsteinen an der Baustelle ortsveränderlich wahlweise Handsägen bzw. Kettensägen mit Motorantrieb verwendet. Stationär kommen Kreis- und Bandsägen zum Einsatz.

Die anfangs genannte Handsäge erfordert recht ansehnliche Kraftanstrengungen und ist relativ zeitaufwendig.

Die hier angesprochenen ortsveränderlichen maschinellen Sägen werden entweder elektrisch oder durch einen Verbrennungsmotor angetrieben. Sie schneiden durch eine über ein Schwert und ein Ritzel laufende Kette mit Sägezähnen oder zwei gegenläufige Sägeblätter.

In beiden Fällen sind hohe Drehzahlen notwendig, um die erforderlichen Kräfte zu übertragen, wodurch sowohl Schwert, Kettenglieder und Ritzel, als auch Sägeblätter und Führungsschwert einem relativ hohen Verschleiß unterworfen sind.
Hinzu kommt ein überaus hohes Verletzungs- und Unfallrisiko durch z.B. beidseitig ungeschützt- und hochtouriglaufende, sowie auch reißende Ketten. Bei den elektroangetriebenen Ketten kommt noch die Gefahr durch anliegende Spannung am witterungsabhängigen Arbeitsplatz (Nässe etc.) hinzu.
Des weiteren werden mehr oder weniger die Umwelt belastende Schmiermittel in größeren Mengen benötigt, um den anfangs erwähnten Verschleiß in Grenzen zu halten.

Bei der neuartigen maschinellen Druckluftsäge entfallen vorgenannte Schwachpunkte:
- hohe Drehzahlen sind nicht notwendig, da die Luftdrucksäge entsprechend der Handsäge jedoch durch einen Pneumatikzylinder betrieben, in linearer Bewegung hin- und hergeführt wird.
   Bei dieser Sägebewegung (linear/ Hin- und Her) wird das anfallende,abrasive Material bei jedem Hub und im Gegensatz zu den gegenläufig wirkenden Sägeblättern jeweils ausgeräumt.
- entgegen den konventionellen Sägen ist die Arbeitsgeschwindigkeit stufenlos einstellbar, was sich sowohl bei den verbrennungsmotorbetriebenen, als auch bei den elektromotobetriebenen Sägen herkömmlich nur mit sehr aufwendigen Techniken erreichen ließe.
- aufgrund der Arbeitsgeschwindigkeit ist der Verschleiß an Sägezähnen bei der Luftdrucksäge mit dem der Handsäge vergleichbar.
- elektrobedingte Spannungsfelder sind nicht vorhanden. Eine hieraus sich ergebende Gefährdung ist somit ausgeschlossen.
- Reißen von Ketten nebst Kettenglieder und die damit verbundene Verletzungsgefahr ist nicht mehr vorhanden.
- bisher benötigte Schmiermittel entfallen, können jedoch u.U. aus Wasser oder Luft zugeführt werden. (Staubbindung, Freiblasen der Schnittstelle etc.)
- herkömmliche hohe Lärmbelästigung (schrilles Kreischen) am Einsatzort durch Verbrennungs- und Elektromotor entfällt.

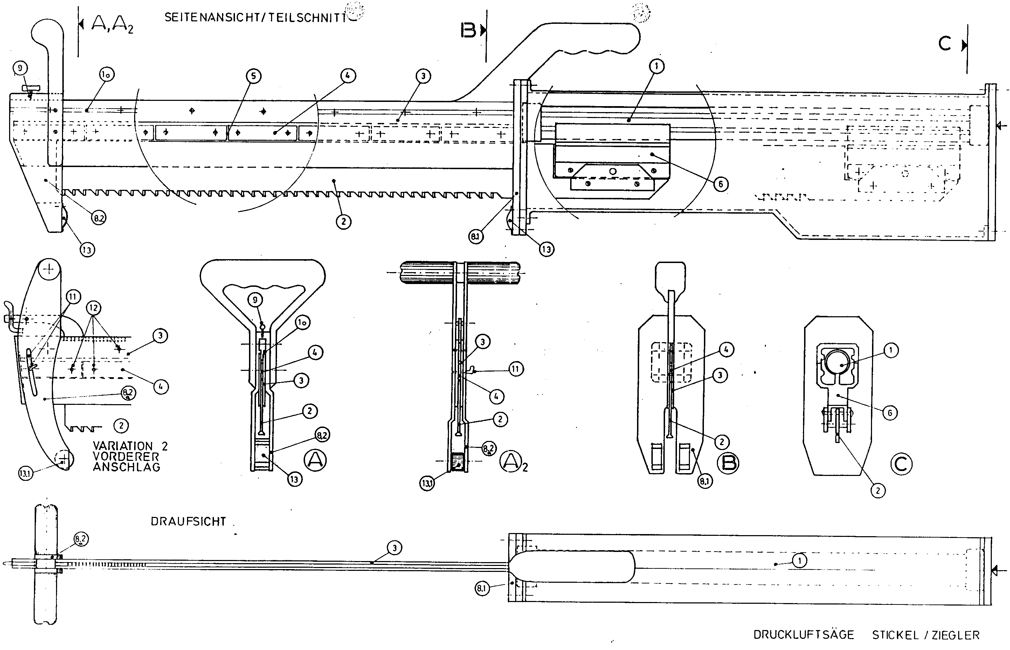

## Patentansprüche

1. Druckluft-Säge, handgeführt, u.a. für Steinmaterialien etc.

2. Maschine nach 1, dadurch gekennzeichnet, daß der Antrieb durch einen kolbenstangenlosen Pneumatikzylinder mit innenliegendem Vollkolben (1) erfolgt

3. Maschine nach 1 + 2, dadurch gekennzeichnet, daß ein einziges Sägeblatt (2) - auf Zug arbeitend - mit diesem Zylinder (1) verbunden ist

4. Maschine nach 1 - 3, dadurch gekennzeichnet, daß dieses Sägeblatt (2) in einem genuteten/geschlitzten Führungsblatt (3) hin- und herbewegt wird

5. Maschine nach 1 - 4, dadurch gekennzeichnet, daß in dieses Führungsblatt (3) eine Gleitschiene (4) integriert ist

6. Maschine nach 1 - 5, dadurch gekennzeichnet, daß in dieser Gleitschiene (4) in bestimmten Abständen Kanäle (5) verlaufen

7. Maschine nach 1 - 6, dadurch gekennzeichnet, daß durch diese Kanäle (5) bei Bedarf Luft (Abluft), Wasser o.ä. als "Schmier-/Kühlmittel" und "Reinigungsmedium" gedrückt werden kann

8. Maschine nach 1 - 7, dadurch gekennzeichnet, daß das Sägeblatt (2) an oben genanntem kolbenstangenlosen Pneumatikzylinder (1) mit einem außengeführten Gleitschlitten (6) angebracht ist

9. Maschine nach 1 - 8, dadurch gekennzeichnet, daß die Befestigung des Sägeblattes (2) an diesem Gleitschlitten (6) nicht starr, sondern flexibel ist

10. Maschine nach 1 - 9, dadurch gekennzeichnet, daß das Sägegut (7) durch Halte-/Spannvorrichtungen (8) fixiert wird

11. Maschine nach 1 - 10, dadurch gekennzeichnet, daß die hintere Haltevorrichtung (8/1) fest angebracht, die vordere (8/2) am Führungsblatt (3) jedoch stufenlos einstellbar ist

12. Maschine nach 1 - 11, dadurch gekennzeichnet, daß daß die verstellbare Haltevorrichtung (8/2) in zwei Nuten (10) am Führungsblatt (3) geführt wird

13. Maschine nach 1 - 12, dadurch gekennzeichnet, daß die stufenlos verstellbare Haltevorrichtung das Führungsblatt (3) zangenförmig umgreift

14. Maschine nach 1 - 13, dadurch gekennzeichnet, daß die stufenlos verstellbare Haltevorrichtung (8/2) durch einen Knebel- oder Exzenter-Verschluß (9) - auf den Rücken des Führungsblattes (3) wirkend - fixiert werden kann

15. Maschine nach 1 - 14, dadurch gekennzeichnet, daß die vordere Haltevorrichtung (8/2) alternativ nicht in Führungsnuten (10) läuft, sondern durch Bolzen (11) in einem vorgegebenen Raster (12) fixiert werden kann (8/2a)

16. Maschine nach 1 - 15, dadurch gekennzeichnet, daß die alternative Haltevorrichtung (8/2a) zusätzlich durch einen Führungsschlitz (11) verstellbar ist, so daß auch hier eine stufenlose Verstellung ermöglicht wird

17. Maschine nach 1 - 16, dadurch gekennzeichnet, daß sich das Sägeblatt (2) in beiden Fällen durch die vordere Fixierung (8/2 - 8/2a) hindurchbewegen kann

18. Maschine nach 1 - 17, dadurch gekennzeichnet, daß am unteren Ende der Haltevorrichtungen (8/1-8/2-8/2a) entweder Federn oder Rollen (13-13/1) angeordnet sind, die ein Herabgleiten der Säge am Sägegut ermöglichen
